# DEMANDE DE BREVET EUROPEEN

(11) **EP 1 277 406 A2**
(43) Date de publication de la demande: **22.01.2003**
(21) Numéro de dépôt: 01402596.9
(22) Date de dépôt: 09.10.2001
(51) Int. Cl.: A22B 3/12

(54) **Système de contrôle et d'authentification de la viande hallal dans l'industrie d'abbatage et de transformation**

(30) Priorité: 19.07.2001 MA 2627601
(71) Demandeur: Ben Hachim Hamidou, 76100 Rouen (FR)
(72) Inventeur: Ben Hachim Hamidou, 76100 Rouen (FR)

(57) **Abrégé**

La présente invention concerne un système de contrôle et d'authentification de la viande HALLAL dans l'industrie d'abattage et de transformations.

On sait que la méthode d'abattage appelée tuerie traditionnelle est interdite dans l'islam qui nous ordonne de sacrifier les animaux.

Il est admis que le sang coagulé et séquestré dans la viande d'une bête non-saignée est un poison lent, d'où l'importance de cette pratique rituelle qui permet de vider le corps de la bête de son sang.

## Description

Le système de contrôle et d'authentification de la viande HALLAL dans l'industrie d'abattage et de transformations est un système qui doit être appliquer aux :
Abattoirs industriels et avicoles, boucheries et fabricants de plats cuisinés, de charcuteries et de steck-haché.

Les règlements de la D S V dans le C E E comme dans la majeur parti des pays dans le monde non musulman, imposent aux abattoirs d'assommer les bovins, d'électrocuter les ovins, le poulet et les dindes. Cette méthode d'abattage appelée tuerie traditionnelle est interdite dans l'islam qui nous ordonne de sacrifier les animaux domestique. En effet, il est connu médicalement qu'en dehors des conditions physiologiques, le sang est une substance relativement nuisible pour l'homme et ce pour les raisons suivantes :
- destruction rapide des globules rouges avec libération de leur contenu principalement l'hémoglobine qui constitue un milieu de culture très favorable au développement des germes aérobies. Tous ces phénomènes se passent après la mort de la bête et dont les conséquences seraient la séquestration du sang dans la viande

### NECESSITE DU SYSTEME DE CONTROLE ET D'AUTHENTIFICATION DE LA VIANDE HALLAL DANS L'INDUSTRIE D'ABATTAGE ET DE TRANSFORMATION

1) Il a été démontré que l'obligation de sacrifier les animaux pour les vider de leur sang est une prévention pour les humains et le moyen d'abattage le plus clément qui nous permet d'obtenir une viande de meilleur goût et de bonne conservation. En effet la section des gros vaisseaux du cou au cours de l'abattage épargne pour un certain temps le système neurovégétatif responsable de la persistance de l'activité mécanique cardiaque qui continue à vider le corps de son sang tout en sachant que le sang est chassé par augmentation du retour veineux vers le coeur qui continu à expulser le sang hors du corps.
2) L'électrocution de haut-voltage des ovins, poulet et dindes au moment de l'abattage conduit inévitablement au coma avec brûlure local et nécrose ou mort tissulaire
3) L'expérience nous a apprit également que les non musulmans sont insensibles au respect de la foie islamique tout comme il a été constaté que tous les systèmes de méthodologie mis en place par les services de la qualité ont été défaillants quant à l'abattage rituel.
4) Lorsque les pièges tombent en panne où que les sacrificateurs soient absents, les animaux sont tués en mode dite traditionnelle et ne sont jamais signalés.

Le système de contrôle et d'authentification de la viande HALLAL dans l'industrie d'abattage et de transformation reste le moyen le plus efficace qui permet de concilier les exigences économiques avec l'obligation Devine.

### Modification du système d'électrocution des, poulets et dindes

Pour les poulets et dindes un système d'abattage sans électrocution préalable est mis au point de façon à faire correspondre l'abattage à la qualité hallal.

### PROCEDURE DU SYSEME DE CONTROLE ET D'AUTHENTIFICATION ( voir fiches techniques de traçabilité )

### Aux abattoirs

a) Les animaux destinés aux sacrifices rituels doivent passer en tête de chaîne afin d'éviter tout mélange avec les viandes non-Hallal où le porc et pour que les abats bénéficient de la propreté des crochets et tapis.
b) Les sacrificateurs musulmans apposent le cachet d'authentification sur les carcasses aussitôt après le sacrifice des animaux pour faire distinguer la qualité de la viandes hallal. Aucune dérogation à ce principe n'est acceptable sauf si tous les abattages sont rituels. ( pays musulmans )

### Stockage

c) Le stockage des carcasses doit respecter les circuits définis de façon à ne pas les mélanger avec les viandes non-hallal où le porc.

### Désossage

d) Le désossage doit être fait en présence d'un contrôleur musulman qui après fermeture appose le cachet d'authentification sur chaque carton pour garantir la qualité Hallal de leur contenu.

### Fabrication

e) La fabrication doit être faite sous responsabilité musulmane qui contrôle systématiquement à la réception si les marchandises portent le cachet d'authentification faute de quoi, elles doivent être considérées illicite et renvoyées.

### Responsabilité

f) Le fabricant où le boucher musulman est responsable de ses actes et la marchandise mise en consommation pour les musulmans doit avoir une qualité HALLAL.
g) Sachant que les viandes Hallal sont authentifiées aux abattoirs par les musulmans sacrificateurs, systématiquement il contrôle à la réception si toutes ses viandes, abats où minerais sont porteurs du cachet d'authentification garantissant leur qualité HALLAL.

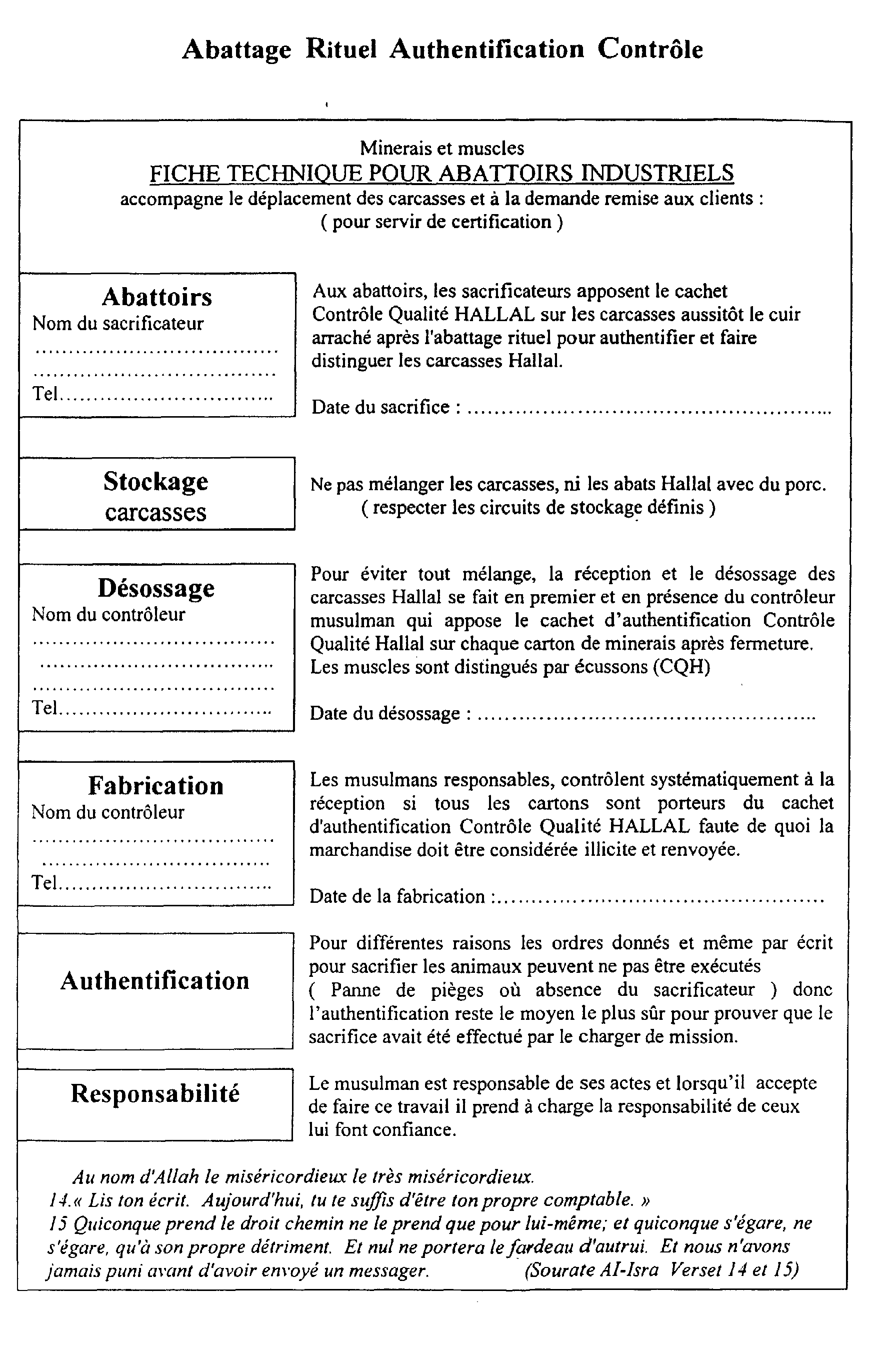

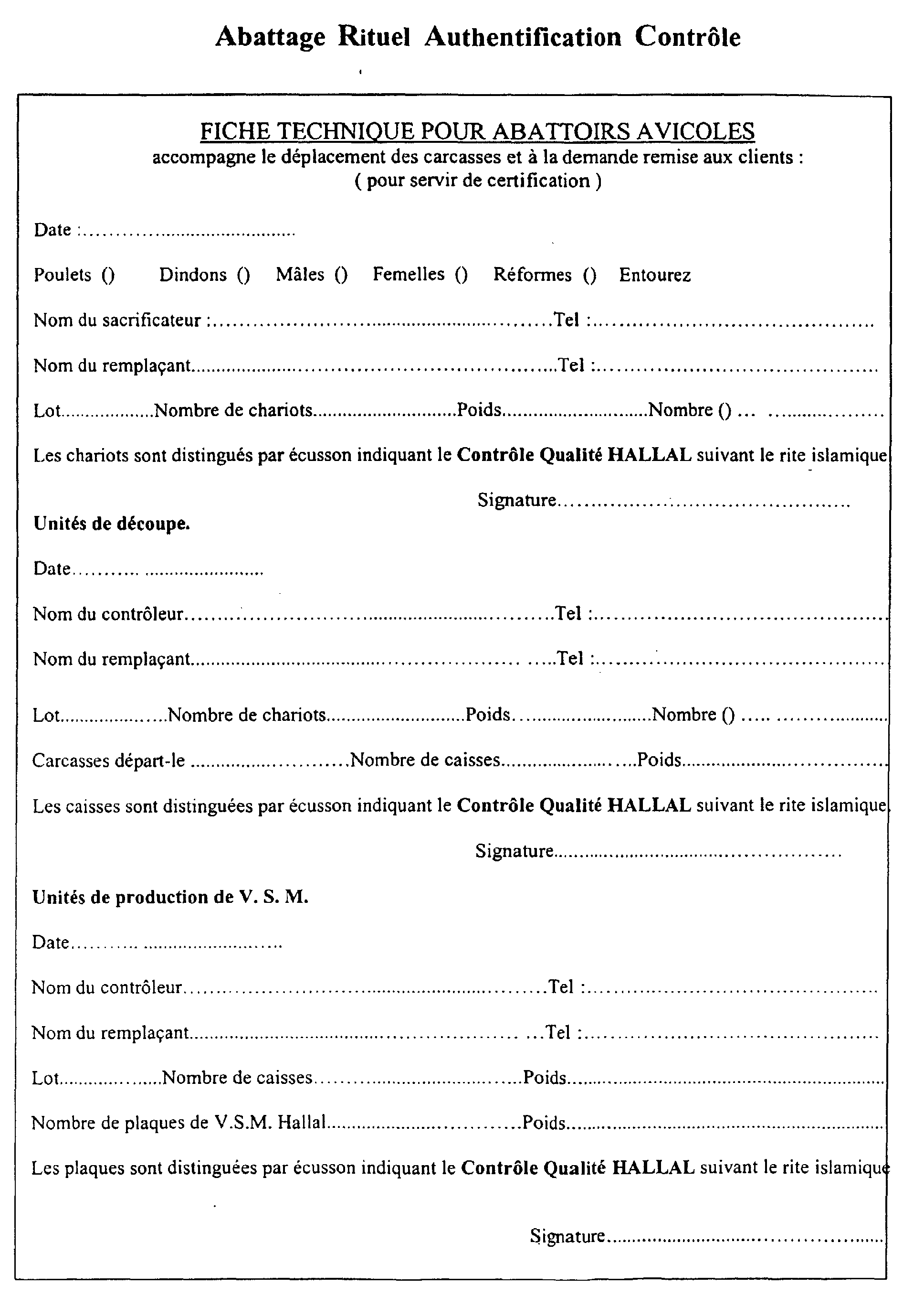

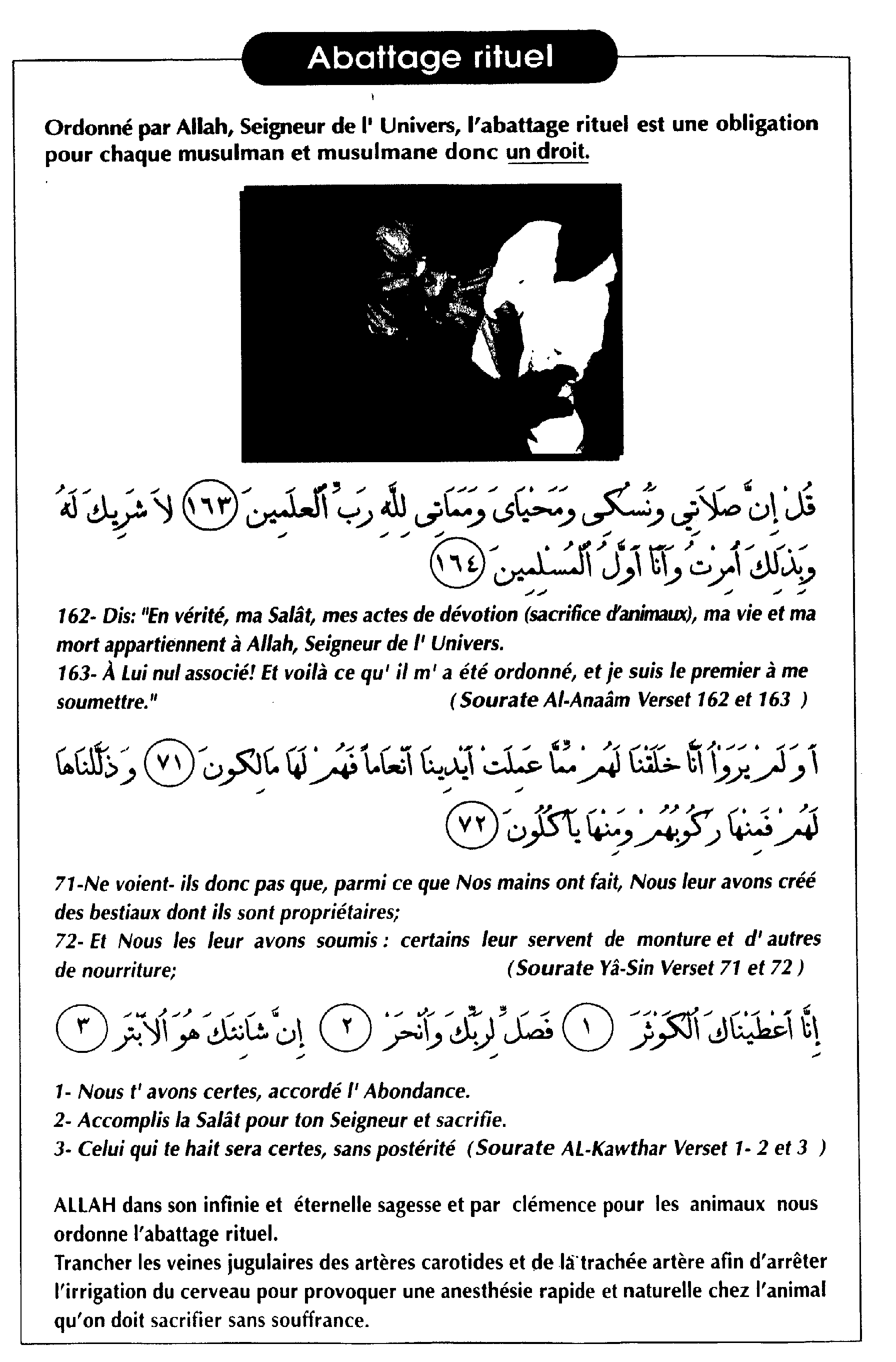

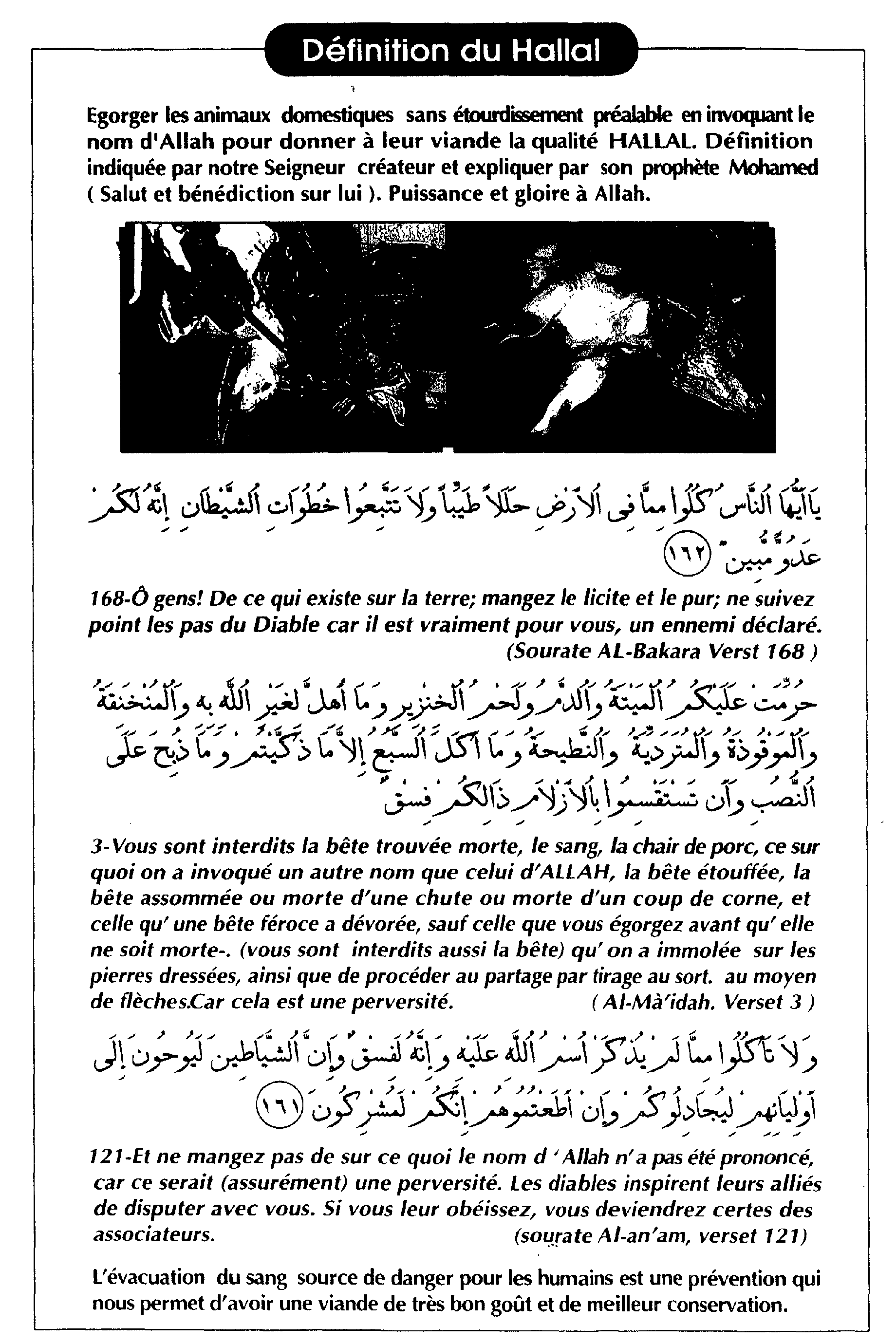

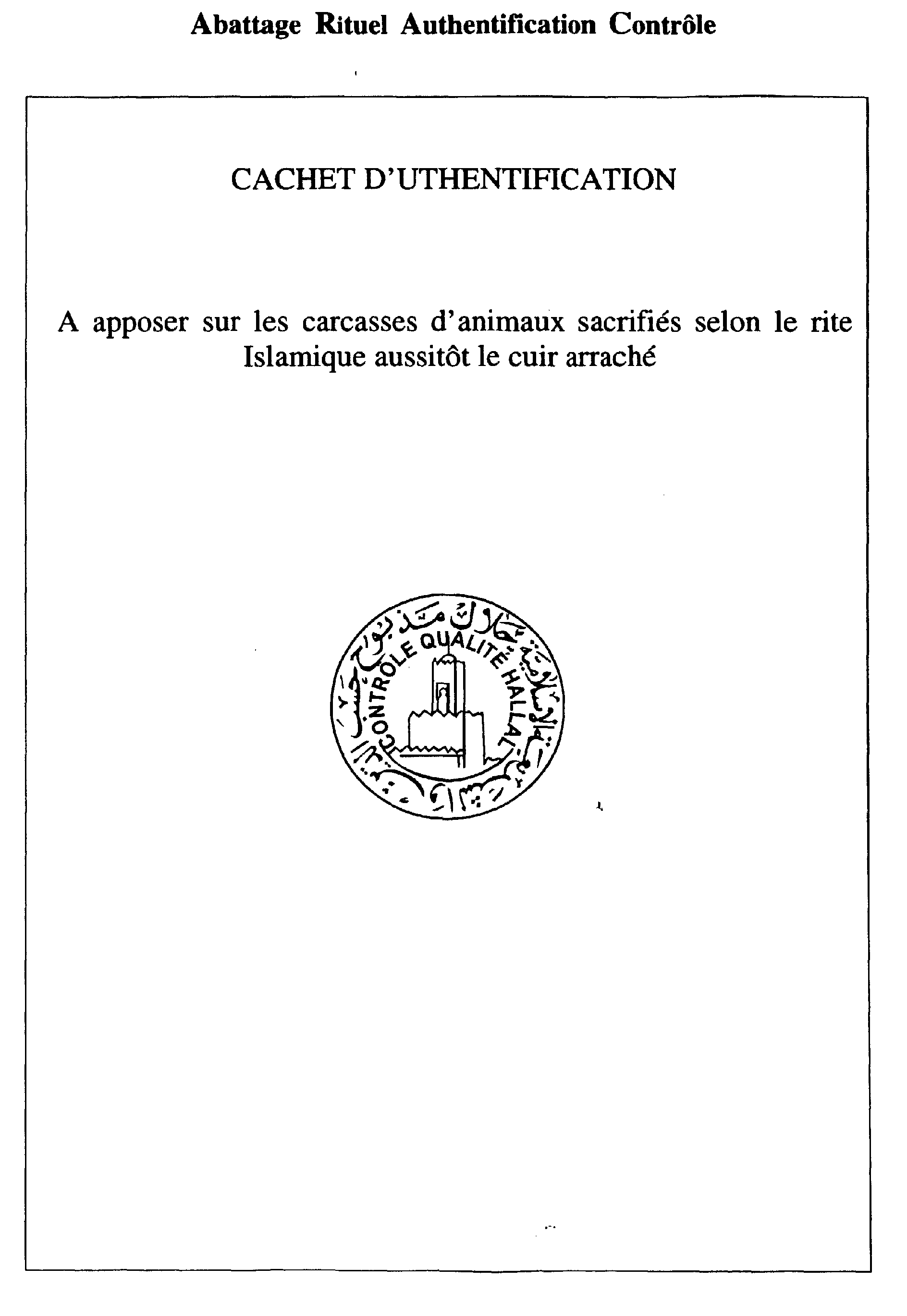

## Revendications

1. système de contrôle et d'authentification de la viande HALLAL dans l'industrie d'abattage et de transformations **caractérisé en ce qu'**il comporte une procédure de contrôle et d'authentification de l'abattage rituel.

2. système de contrôle et d'authentification **caractérisé en ce qu'**il comporte une modification du système d'électrocution pour l'adapter à la qualité HALLAL.

3. système de contrôle et d'authentification **caractérisé en ce qu'**il comporte un cachet d'authentification et des fiches techniques de traçabilité d'abattoirs industriel et d'accompagnement des carcasses où viandes dans leurs déplacements, soit dans les unités de désossage ou de fabrication (charcuteries, steak haché, et plats cuisinés)

4. système de contrôle et d'authentification **caractérisé en ce qu'**il comporte un cachet d'authentification et des fiches techniques de traçabilité d'abattoirs avicole et d'accompagnement des lapins, des chevreaux, des dindes des poulets, où de leurs carcasses dans leur déplacement, soit dans les unités de découpe ou de fabrication ( V S M, plats cuisinés )

5. système de contrôle et d'authentification **caractérisé en ce qu'**il comporte un système qui assure la qualité HALLAL
